# EUROPEAN PATENT SPECIFICATION

(11) **EP 2 882 584 B1**
(45) Date of publication and mention of the grant of the patent: **11.03.2020**
(21) Application number: 13762195.9
(22) Date of filing: 06.08.2013
(51) Int. Cl.: B60C 11/03, B60B 15/02, B29D 30/66, B60B 15/00, B60C 7/00

(54) **INTEGRAL VEHICLE WHEEL**
INTEGRALES FAHRZEUGRAD
ROUE INTEGRALE POUR VEHICULE

(30) Priority: 10.08.2012 GB 201214301; 22.08.2012 GB 201214920
(43) Date of publication of application: 17.06.2015
(73) Proprietor: Golf Innovations Limited, Haywards Heath, West Sussex RH17 5PB (GB)
(72) Inventor: ROLFE, Michael, Poole, Dorset BH13 6JT (GB); INGRAM, Mark, Herstmonceux, East Sussex BN27 4PP (GB)
(74) Representative: Fry, David John
(86) International application number: PCT/GB2013/000334
(87) International publication number: WO 2014/023928

(56) References cited:
- GB-A- 2 467 956
- US-A1- 2007 044 880
- "Golfstream, the UK Electric Golf Trolley experts, to distribute Hedgehog wheels and tyres", Internet , 11 January 2011 (2011-01-11), XP002717077, Retrieved from the Internet: URL:http://www.golfblogger.co.uk/post/golf stream-the-uk-electric-golf-trolley-expert s-to-distribute-hedgehog-wheels-and-tyres- 3bd [retrieved on 2013-11-27]

## Description

This invention relates to a wheel for an electrically powered vehicle such as a golf trolley, golf cart or golf buggy (hereinafter referred to simply as a golf trolley for ease of reference).

It is well known that electrically powered golf trolleys cannot be used on the fairways of many golf courses during periods of inclement weather because of the damage which the front and rear wheels of these trolleys can cause during such periods. To overcome this problem, specially designed stud-bearing tyres have been proposed. An example of such a tyre can be seen in European Patent EP1625027.

These tyres comprise bands of resilient material which are fitted over the existing wheels of golf trolleys for use during periods of inclement weather, and then, in many cases, removed during periods of dry weather. This is both inconvenient and time consuming.

Furthermore, to avoid any relative movement between such a tyre and the trolley wheel on which it is fitted, the tyre's internal diameter must be the same as, or only marginally larger than, the external diameter of the respective wheel rim. Such tyres have therefore proved to be difficult to fit. When stretched by frequent use, the tyres have been found to move relative to the wheel rim so negating their intended function of preventing damage to the fairway surfaces over which they pass. Such tyres have also been found to stretch through use thereby limiting their longevity and usefulness.

Golf trolley wheels formed with protruding studs of various shapes have also been proposed but none have proved to be consistently successful in overcoming the problems referred to above. One example of such a golf trolley wheel is to be found in US Patent Application 2007/0044880A. Another tyre of golf trolleys is known from Golfstream, the UK Electric Golf Trolley Expert, to distribute Hedgehog wheels and tyres (XP-Citation 002717077).

To meet these problems the Applicant has designed a unique wheel for an electrically powered vehicle, particularly a golf trolley wheel, which is preformed as a single piece in a single or multiple moulding process with one or a plurality of rows of substantially radial ground engaging studs or blades projecting from its rim. Each stud or blade is of a composition, shape and height to enable the wheel to travel over golf fairways and similar surfaces during inclement weather conditions without causing damage to the fairway or like surface. Each ground engaging member may comprise a generally conical-shaped stud or an elongate blade member whose sides normal to the rolling direction of the wheel are shaped as will be described below.

Golf trolley wheels in accordance with the invention can successfully be fitted to the front and/or rear wheel axles of golf trolleys to prevent, or at least minimise, fairway damage, albeit that the wheel sizes may differ. In addition, wheels in accordance with the invention can be used in all weather conditions on fairways, pathways or hard surfaces without damage to either the surface or the wheel tyres.

According to the invention there is provided a wheel for an electrically powered vehicle such as a golf trolley, the wheel comprising an assembly of a rim and an integral tyre, the rim being pre-formed from a polypropylene material and including a plurality of keying members which either project from or extend into the rim surface, and the tyre being over moulded onto the rim from an elastomeric material whereby, in use of the wheel, the keying members prevent relative movement between the tyre and the rim, the tyre further comprising a plurality of ground engaging members which project radially (or substantially radially) from the tyre surface and whose surfaces in planes normal to the rolling direction of the wheel describe arcs which extend downwardly from the tips of the members over at least a major part of their heights.

In a preferred arrangement, the polypropylene material is a glass filled polypropylene material, typically a 20% glass filled polypropylene material.

The elastomeric material may comprise thermo-plastic rubber (TPR).

The keying members may comprise ridges or channels which extend partially or fully across the width of the rim surface.

Alternatively, or additionally, keying members may comprise circumferentially extending channels which run around the sides of the rim just below the tyre rim surface.

Alternatively or additionally, the keying members may comprise discrete projections which stand proud from the surface of the tyre. These projections may be positioned at locations which, when the tyre has been moulded over the rim surface, correspond to the locations of the ground engaging members of the tyre. The projections are exposed in time to indicate tyre wear.

The arc radius is preferably between 30mm and 36mm. In a preferred embodiment, the arc radius is 33mm.

The ground engaging members preferably project radially from the surface of the tyre. The angle subtended between the radii of neighbouring members may be between 24 and 45 degrees.

The tyre may be formed with one or more rows of ground engaging members.

The height of each ground engaging member is preferably between 10mm and 48mm.

For a front wheel of an electrically powered vehicle, the height of each ground engaging member is typically between 12mm and 18mm. In one arrangement the height of the ground engaging member of a front wheel tyre is 14mm.

For a rear wheel tyre, the height of each ground engaging member is typically between 22mm and 28mm. In one arrangement the height of each ground engaging member of the rear wheel tyre is 24mm.

The ground engaging members may comprise conically shaped studs whose sides describe arcs over a major part of their heights.

The diameter of the base of each stud is typically between 15mm and 22mm, preferably between 17.5mm and 20mm. For a front wheel a preferred base diameter is 17.5mm and for a rear wheel a preferred base diameter is 20mm.

The diameter of a front wheel is typically between 75mm and 110mm, preferably equal to or between 90mm and 100mm, and the diameter of a rear wheel is typically equal to or between 190 and 360mm.

In an alternative arrangement, the ground engaging members comprise blade shaped members which extend across part or the entire width of the tyre rim. The front and rear walls of these blade shaped members being, in planes normal to the rolling direction of the wheel, arcuate over a major part of their heights.

In another aspect, the invention provides a wheel for an electrically powered vehicle, the wheel comprising an assembly of a rim and an integral tyre, the rim being preformed from a polypropylene material and the tyre being over moulded onto the rim from an elastomeric material, the tyre further comprising a plurality of ground engaging members which project substantially radially from the tyre surface and whose upper surfaces in planes normal to the rolling direction of the wheel describe arcs of radii of between 30mm and 36mm.

In a further aspect, the invention provides a wheel for an electrically powered vehicle which includes a preformed tyre comprising a plurality of ground engaging members which project radially or substantially radially from the tyre surface and whose upper surfaces in planes normal or substantially normal to the rolling direction of the wheel describe arcs of radii of between 30mm and 36mm.

The arc of radius is preferably 33mm.

The wheel is preferably formed with between one and four rows of ground engaging members.

The ground engaging members may comprise conically shaped studs whose sides describe arcs over a major part of their lengths.

Alternatively, the ground engaging members may comprise blade shaped members which extend across part or the entire width of the tyre, the front and rear walls of these blade shaped members being, in planes normal to the rolling direction of the wheel, arcuate over a major part of their heights.

The invention will now be described by way of example only with reference to the accompanying drawings in which:
Figures 1 to 3 are front, side and isometric views respectively of a rim of a golf trolley wheel in accordance with the invention without an over moulded tyre;
Figures 4 and 5 are front and isometric views of a tyre as over moulded onto a rim of a golf trolley wheel in accordance with the invention, the rim not being illustrated;
Figures 6 to 8 are front, side and isometric views of a first golf trolley wheel in accordance with the invention having a single row of studs;
Figures 9 and 10 are respectively front and side views of a second golf trolley wheel in accordance with the invention having two rows of studs;
Figure 11 is a side view of a third golf trolley wheel in accordance with the invention having three rows of studs;
Figures 12 to 14 are respectively front, side and isometric views of a fourth golf trolley wheel in accordance with the invention having two rows of studs;
Figure 15 is an isometric view of a fifth golf trolley wheel in accordance with the invention having three rows of studs;
Figure 16 is an isometric view of a sixth golf trolley wheel in accordance with the invention having four rows of studs; and
Figures 17 to 19 are front, side and isometric views of a seventh golf trolley wheel in accordance with the invention.

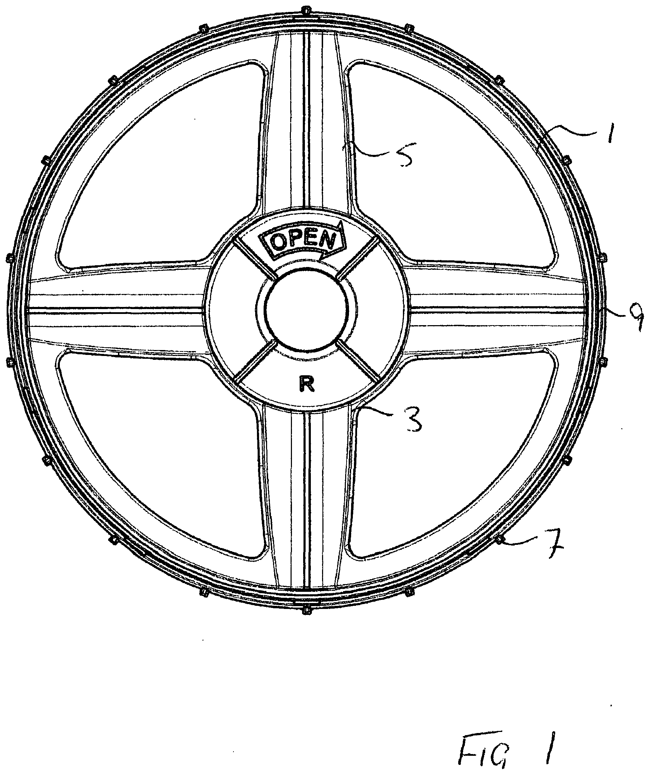

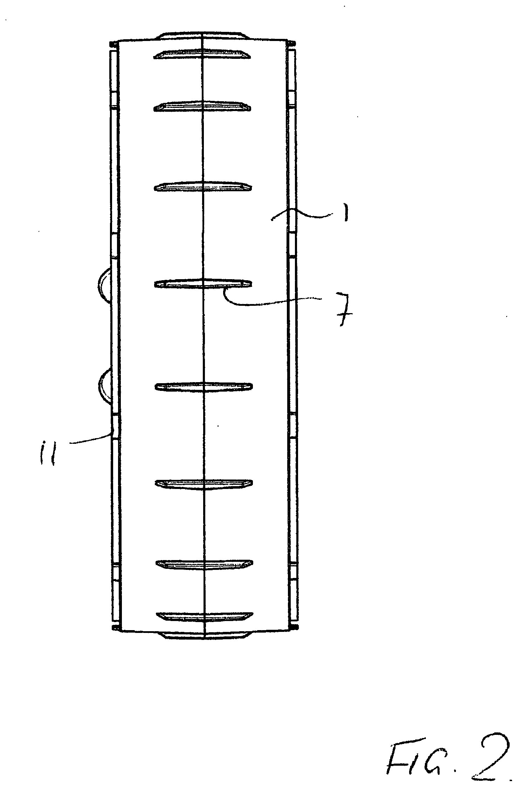

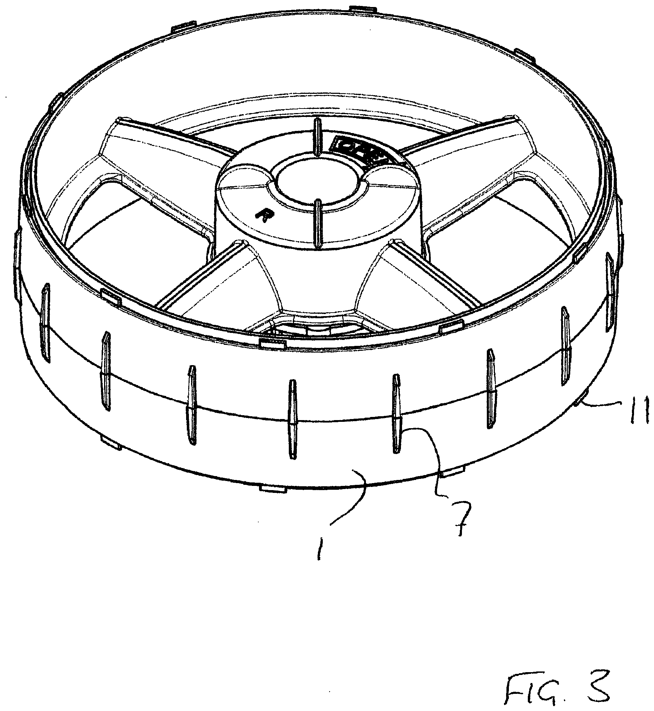

A preformed rim 1 of a golf trolley wheel in accordance with the invention is illustrated in Figures 1 to 3 of the drawings. The rim is preformed as a single piece from a polypropylene material such as glass filled polypropylene and includes a central hub 3 which locates onto an axle of a golf trolley (not shown). The hub may be connected to the rim by spokes 5 as illustrated, or any suitable means.

The rim outer surface is formed with a series of keying members in the form of upstanding laterally extending ridges 7. These ridges may extend laterally over a central part of the rim surface as shown or the full lateral extent of the rim surface. Other configurations could readily be adopted. Circumferential grooves 9 positioned to each side of the rim immediately below its outer boundaries and sideways extending tags 11 which protrude from the side surfaces of the rim provide additional keying members.

As described below, these keying members co-operate with complementary members formed in the as-moulded tyre during the over-moulding process to resist relative movement between the rim and the over moulded tyre during use of the respective golf trolley.

Other forms of keying members may be employed. Thus, the keying members may comprise channels set in the surface of the rim and/or a plurality of projections positioned below ground engaging members which form part of the tyre to be over moulded onto the rim. These projecting keying members may, for example, extend to a height approaching the height of the ground engaging members; for example 4 mm or 6mm below the height of the ground engaging members. The members may be coloured or partially coloured, these coloured parts being exposed in time to provide an indication of tyre wear. Two or more sequential coloured sections may be provided, again to indicate levels of tyre wear. Thus, as the tyre wears to a level of, say, 4mm a first level indicator is exposed, a second indicator of different shape or colour being exposed as the tyre wears to a level of, say, 6mm.

Alternatively, the elastomeric material from which the tyres are produced may be of a different colour to the polypropylene material of the wheel rim, the colour of the latter becoming exposed as the tyre wears down with use.

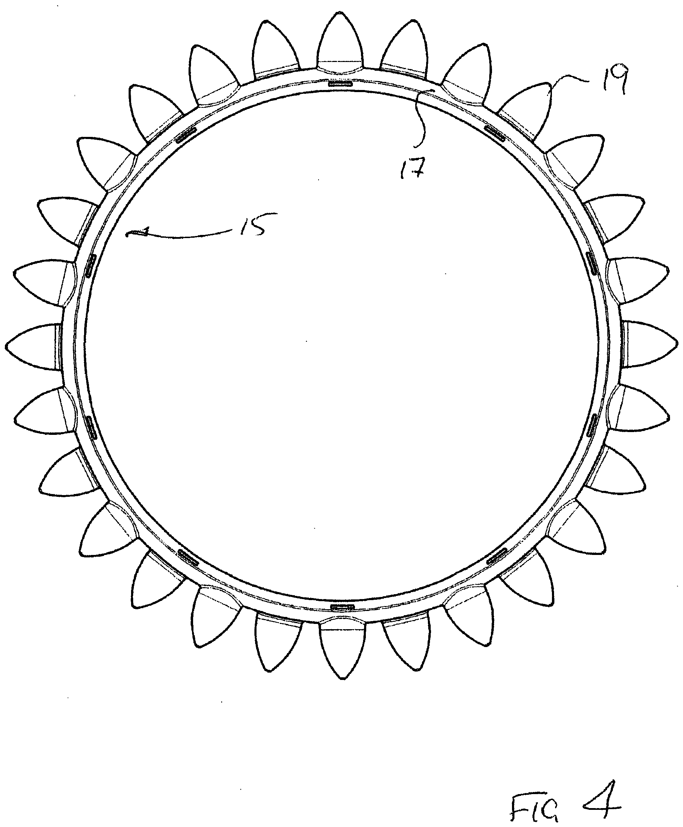

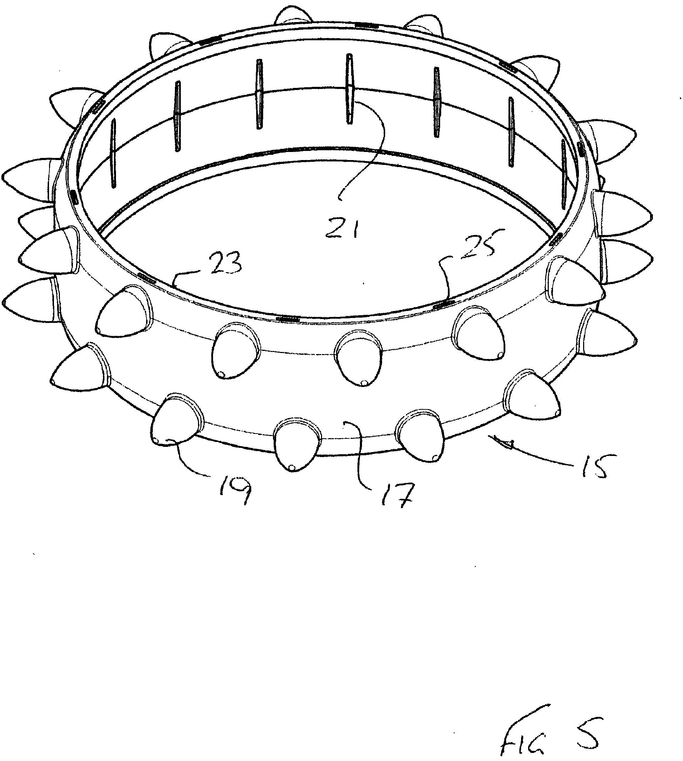

A tyre 15 to be over moulded onto a wheel rim as shown in Figures 1 to 3 is illustrated in Figures 4 and 5. The tyre is formed of an elastomeric material and comprises an outer annulus 17 from which protrude ground engaging members 19. These members will be described in more detail below.

As will be seen from Figure 5, as the elastomeric material is over moulded on the polypropylene rim, the ridges 7 produce complementary grooves 21 in the underside of the tyre. In use of the respective golf trolley, the ridges 7 and the grooves 21 co-operate to define keying members to resist relative movement between the rim and the over-moulded tyre.

Furthermore, during the over moulding of the tyre onto the rim, elastomeric material enters the circumferential grooves 9 and flows over the tags 11 to enhance keying of the over moulded tyre to the rim to resist relative movement between the rim and the tyre during use of the respective golf trolley.

Thus, the co-operating ridges 7 and recesses 21, grooves 9 and ribs 23, and tags 11 and recesses 25 of the rim 1 and the over moulded tyre 15 together resist relative movements of the tyre and the rim caused by torsional forces imposed on the wheel when the wheels are accelerating or decelerating.

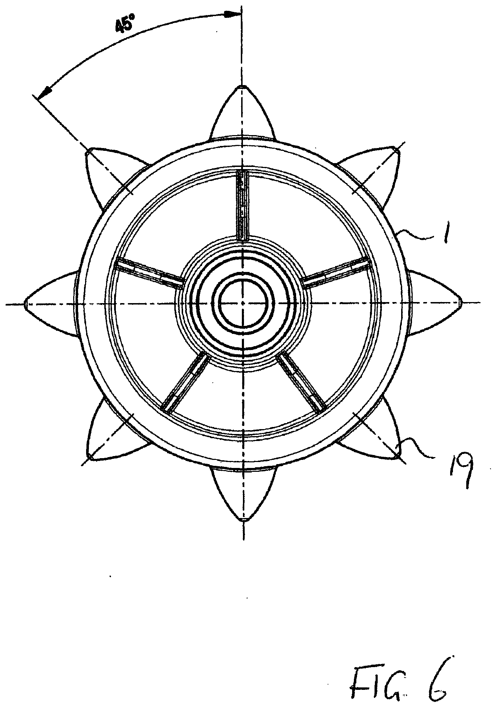

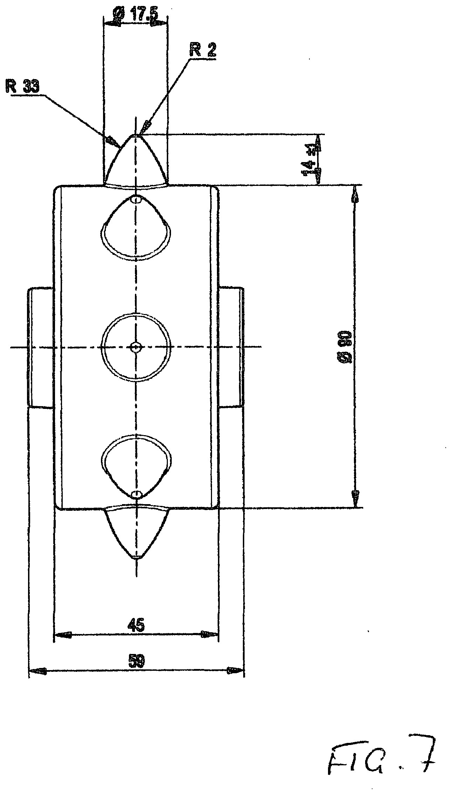

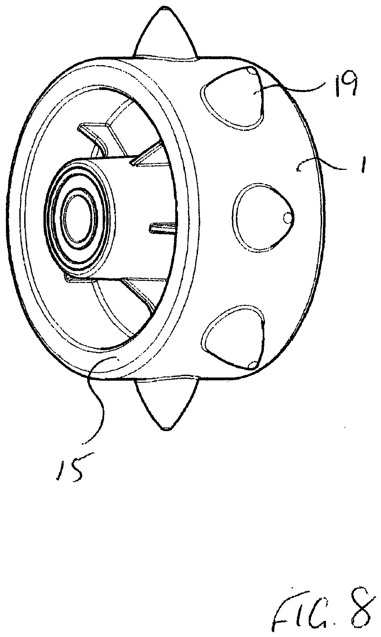

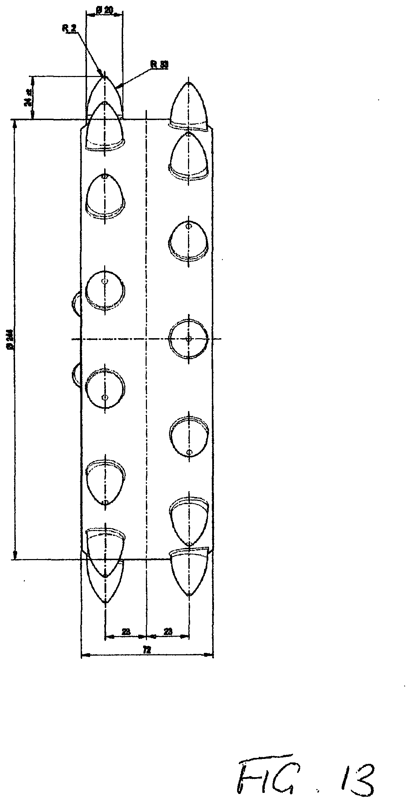

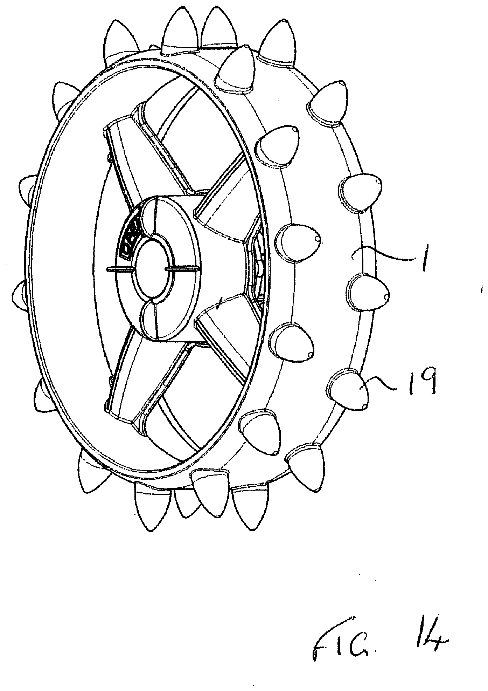

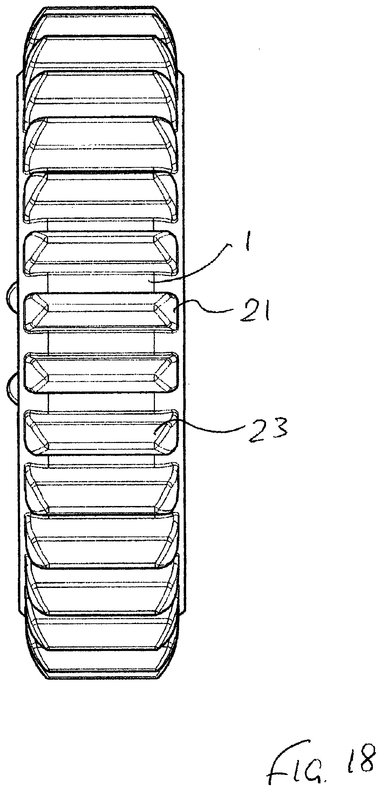

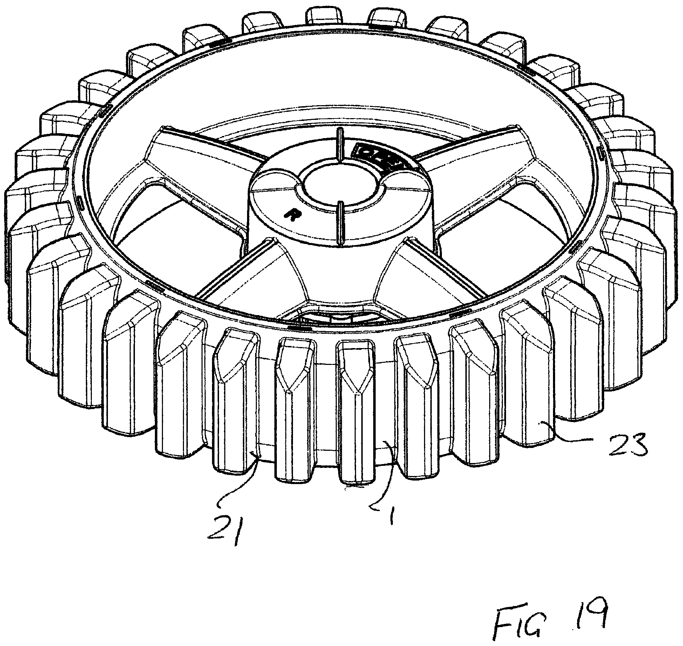

Examples of golf trolley wheels in accordance with the invention will now be described with reference to Figures 6 to 19 of the drawings.

As will be described below, the ground engaging members 19 may be disposed as a single row or a plurality of rows. As already mentioned, the rim 1 is moulded as a single piece from a polypropylene material. The tyre 15 including the ground engaging members 19 of an elastomeric material is then over-moulded onto the rim 1.

As already mentioned, the Applicant has established that a more resilient material to that employed for the wheel itself is required for those parts of the ground engaging members which make contact with and, on occasions, partially penetrate a fairway surface, particularly during inclement weather, to ensure that no damage is incurred to the fairway surface.

The Applicant has also established that the shape of each ground engaging member is equally important in ensuring that the trolley wheels can pass over a fairway surface without disturbing or removing divots from that surface. It is the combination of the material and shape of each ground engaging member which provides important advantages of golf trolley wheels in accordance with this invention.

The golf trolley wheel illustrated in Figures 6 to 8 is more suited as one of a pair of front wheels of a golf trolley and includes a single array of ground engaging members in the form of generally conical studs 19 projecting from the wheel rim 1.

The studs 19 project radially from the wheel rim 1 and are generally of a conical shape whose sides over major parts of their lengths describe arcs of radius of between 30mm and 36m from the stud tips towards the stud bases. In this context it is important that the arcuate parts of each stud extend to a length equal to the expected penetration depth of the stud during periods of inclement weather.

The height of each illustrated stud is 14mm and the diameter of each stud base is 17.5mm. The spacing between the bases of neighbouring studs is typically equal to the stud height. The radius of the curvilinear upper portion of each stud is 33mm. For golf trolley wheels in accordance with this invention, this radius always lies between 30 and 36mm.

The Applicant has established that these measurements in combination with the selection of the aforementioned materials produce a powered golf trolley wheel suitable for use on golf fairways or similar surfaces irrespective of the prevailing weather conditions.

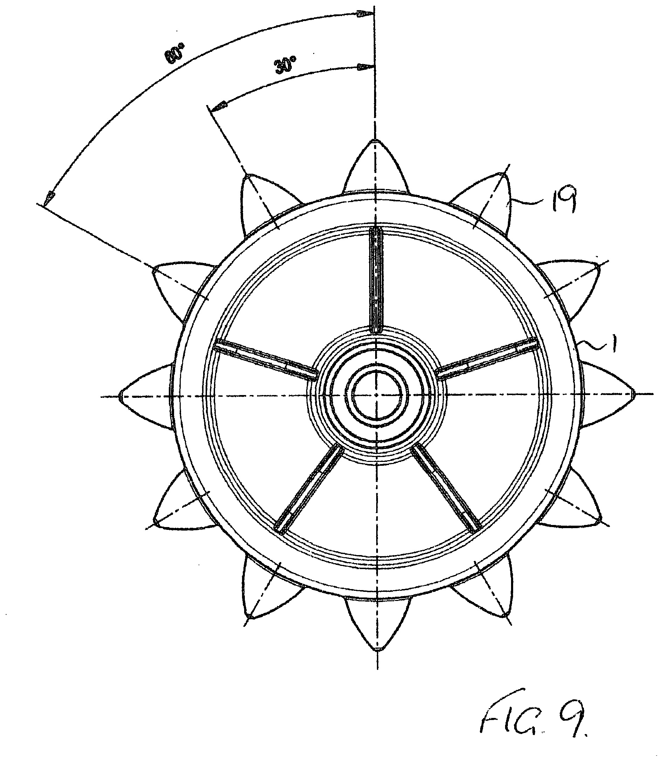

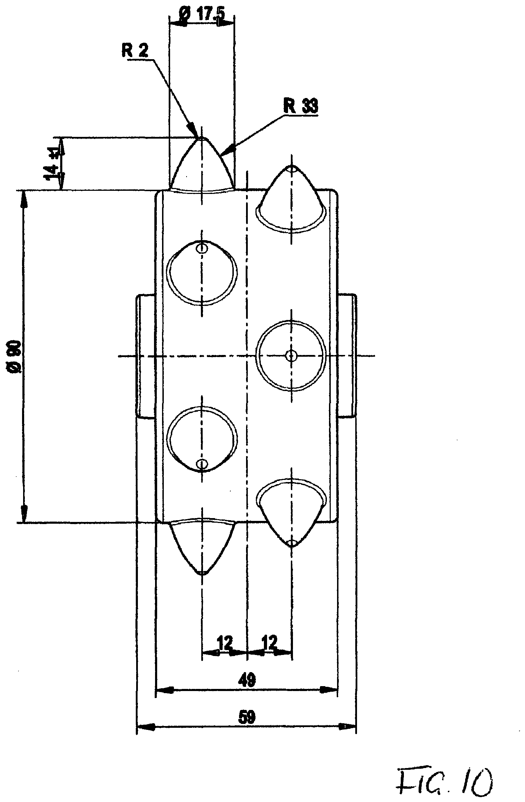

The wheel illustrated in Figures 9 and 10 is also intended to comprise the front wheel of a three wheeled trolley or one of a pair of such wheels for a four wheeled trolley. In this embodiment, two offset rows of generally conical studs 19 project from the surface of the wheel rim 1. It will be seen from these Figures that the wheel diameter and heights of studs are the same as those referred to in the description of the previous embodiment. However, in this embodiment the angle subtended between neighbouring studs of each row is 60 degrees with the angle 9 subtended between neighbouring studs of the two rows being 30 degrees. Furthermore, the centres of neighbouring studs of the two rows are spaced apart by 24mm and the width of the wheel is 49mm.

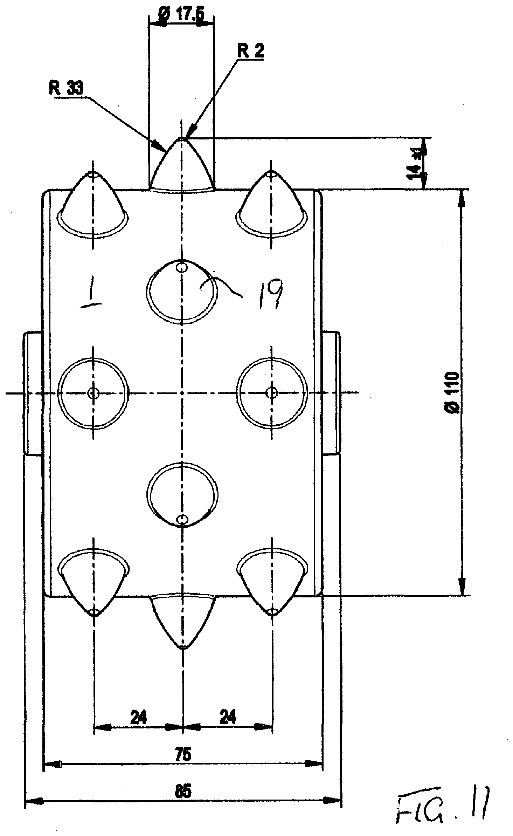

A wheel suited to be a front wheel or one of two front wheels of a golf trolley having three rows of projecting studs is illustrated in Figure 11. As will be seen from this Figure, the studs of the two outer rows are offset from the studs of the inner row. The central axes of the outer pairs of studs are spaced apart by 48mm and the wheel width is 75mm.

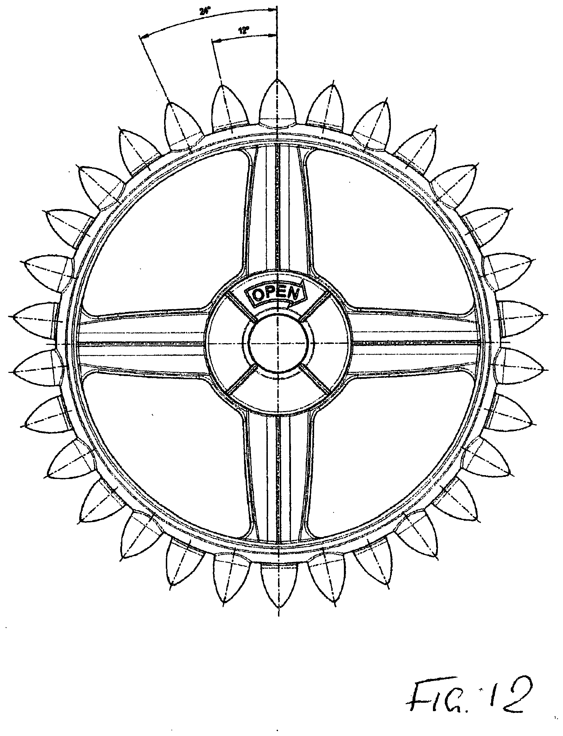

The golf trolley wheel illustrated in Figures 12 to 14 is best suited as one of two identical rear wheels of a golf trolley. The diameter of this wheel is substantially greater than that of the wheels illustrated in Figures 6 to 10; as shown the wheel diameter is 244mm and the wheel width is 72mm. The illustrated wheel has two rows of evenly spaced radial studs each of essentially the same shape as those illustrated in Figures 6 to 10. In this embodiment, the height of each stud is 24mm and the base diameter is 20mm.

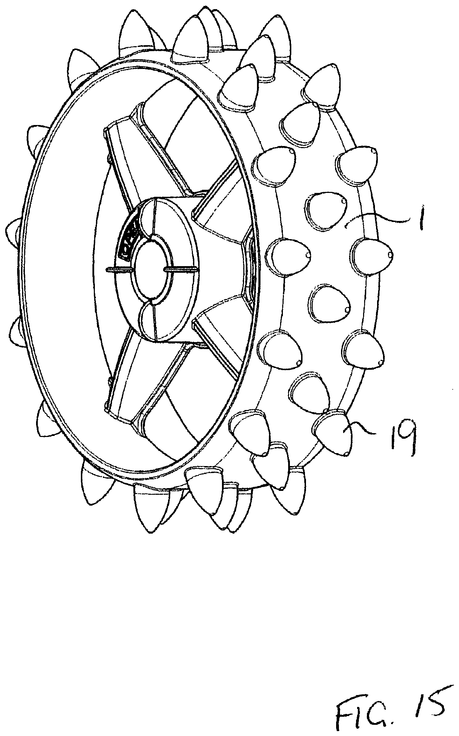

The golf trolley wheel illustrated in Figure 15 has three equally spaced rows of studs. This wheel is again best suited to a rear wheel of a golf trolley. The studs of this embodiment are dimensionally identical to those described above.

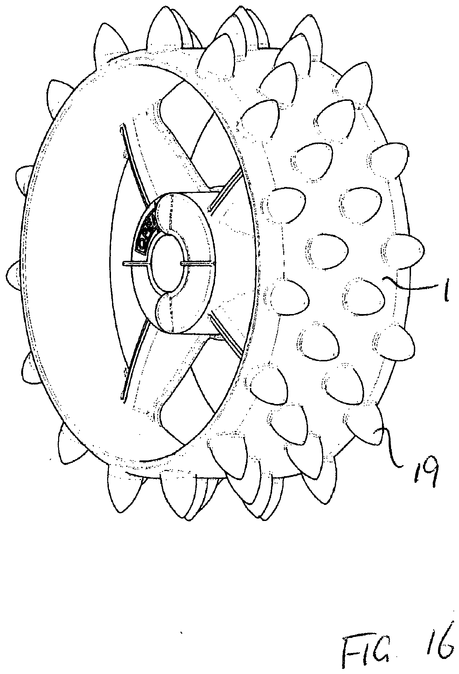

The golf trolley wheel illustrated in Figure 16 is again best suited to being one of a pair of identical rear wheels of a golf trolley. In this embodiment, however, four rows of studs are provided.

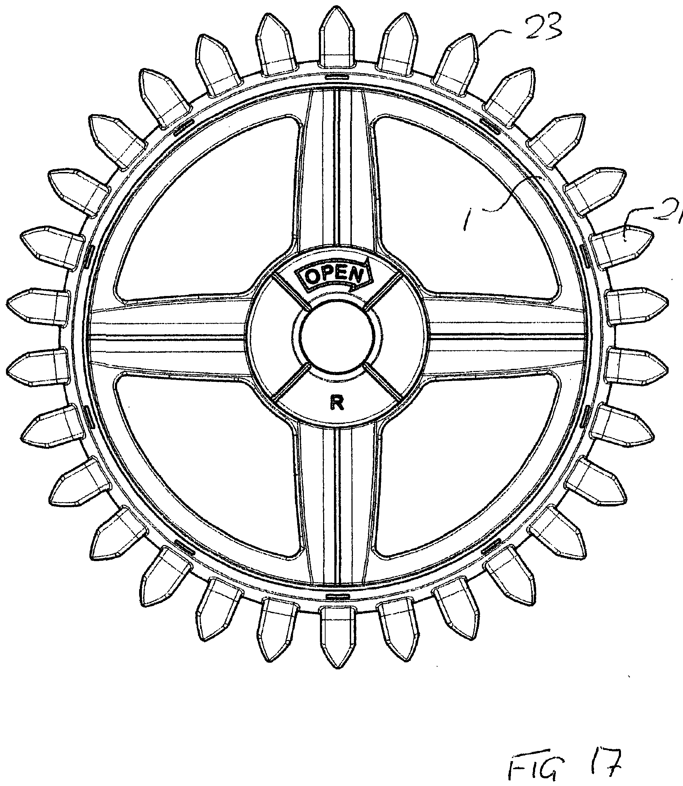

Turning now to the wheels illustrated in Figures 17 to 19, it will be seen from the drawings that the ground engaging members shown in these drawings comprise blades 21 which extend across the width of the rim 1. The tyre including the blades 21 is over moulded onto the rim 1 of Figures 1 to 3 with the same or similar keying members. The front and rear walls of each blade 21 has an arcuate upper section 23 equivalent to the arcuate sections of the previously described generally conical studs, these arcuate sections extending over that part of the blade length which, in use, is likely to penetrate a fairway surface in use of a golf trolley in inclement weather. Other shapes and dimensions of blades may be employed provided that the blade surfaces in planes normal to the axis of rotation of the respective wheel are, as previously described, formed with arcs of radii of between 30mm and 36mm.

In use, it has been established that wheels for powered golf trolleys as described with generally conical studs or blades, each having an upstanding arcuate surface whose radius is from 30mm to 36mm can be used on the fairways of a golf course during dry and wet weather conditions without causing damage to the fairway surfaces over which it travels.

It will be appreciated that the wheels for electrically powered vehicles described are simply exemplary of wheels in accordance with the invention and that modifications can readily be made thereto without departing from the true scope of the invention as set out in the appended claims.

## Claims

1. A wheel for an electrically powered vehicle such as a golf trolley, the wheel comprises an assembly of a rim (1) and an integral tyre (15) which includes a plurality of radially or substantially radially projecting ground engaging members (19), said wheel is **characterized in that** the rim (1) is being pre-formed from a polypropylene material and includes a plurality of keying members (7) which either project from or extend into the rim surface, and the tyre (15) is being over moulded onto the rim (1) from an elastomeric material whereby, in use of the wheel, the keying members (7) prevent relative movement between the tyre and the rim.

2. A wheel as claimed in claim 1 **characterised in that** the side surfaces of the ground engaging members (19) project in planes normal (or substantially normal) to the rolling direction of the wheel and describe arcs of radii of between 30mm and 36mm over at least a major part of their lengths.

3. A wheel as claimed in claim 1 or claim 2 **characterised in that** the wheel is formed with more than one row of ground engaging members (19), each of which extends circumferentially about the wheel outer surface.

4. A wheel as claimed in any one of the preceding claims **characterised in that** the ground engaging members (19) comprise conically shaped studs whose sides describe arcs over major parts of their lengths.

5. A wheel as claimed in any one of the preceding claims **characterised in that** the ground engaging members comprise blade shaped members (21) which extend across part or the entire width of the tyre surface, the front and rear walls of these blade shaped members being, in planes normal to the rolling direction of the wheel, arcuate over a major part of their lengths.

6. A wheel as claimed in any one of the preceding claims **characterised in that** the polypropylene material is a glass filled polypropylene material, typically a 20% glass filled polypropylene material.

7. A wheel as claimed in any one of the preceding claims **characterised in that** the elastomeric material comprises thermo-plastic rubber (TPR).

8. A wheel as claimed in any one of the preceding claims **characterised in that** the keying members comprise ridges or channels which extend partially or fully across the width of the rim surface.

9. A wheel as claimed in any one of the preceding claims **characterised in that** the keying members comprise circumferentially extending channels (9) which run around the sides of the rim just below the rim surface.

10. A wheel as claimed in any one of the preceding claims **characterised in that** the keying members comprise discrete projections standing proud from the surface of the rim.

11. A wheel as claimed in claim 10 **characterised in that** the projections are exposed in time to indicate tyre wear.

## Patentansprüche

1. Rad für ein elektrisch betriebenes Fahrzeug, wie etwa einen Golftrolley, wobei das Rad eine Einheit aus einer Felge (1) und einem integralen Reifen (15) umfasst, mit einer Mehrzahl radial oder im Wesentlichen radial vorstehender Bodeneingriffselemente (19), wobei das Rad **dadurch gekennzeichnet ist, dass** die Felge (1) aus einem Polypropylenmaterial vorgeformt ist und eine Mehrzahl von Verkeilungselementen (7) aufweist, die jeweils von der Felgenoberfläche vorstehen oder sich in diese erstrecken, und wobei der Reifen (15) aus einem elastomeren Material auf die Felge (1) übergeformt wird, wobei die Verkeilungselemente (7) bei Verwendung des Rads eine relative Bewegung zwischen dem Reifen und der Felge verhindern.

2. Rad nach Anspruch 1, **dadurch gekennzeichnet, dass** die Seitenoberflächen der Bodeneingriffselemente (19) in Ebenen vorstehen, die senkrecht (oder im Wesentlichen senkrecht) zu der Rollrichtung des Rads angeordnet sind und Bogenradien zwischen 30 mm und 36 mm beschreiben, über wenigstens einen Hauptteil ihrer Längen.

3. Rad nach Anspruch 1 oder 2, **dadurch gekennzeichnet, dass** das Rad mit mehr als einer Reihe von Bodeneingriffselementen (19) ausgebildet ist, von denen sich jedes umfänglich um die äußere Radoberfläche erstreckt.

4. Rad nach einem der vorstehenden Ansprüche, **dadurch gekennzeichnet, dass** die Bodeneingriffselemente (19) konisch geformte Stifte umfassen, deren Seiten über Hauptteile ihrer Längen Bögen beschreiben.

5. Rad nach einem der vorstehenden Ansprüche, **dadurch gekennzeichnet, dass** die Bodeneingriffselemente schaufelförmige Elemente (21) umfassen, die sich über einen Teil oder die ganze Breite der Reifenoberfläche erstrecken, wobei die vorderen und hinteren Wände dieser schaufelförmigen Elemente in Ebenen, die senkrecht zu der Rollrichtung des Rads verlaufen, über einen Hauptteil ihrer Längen gebogen sind.

6. Rad nach einem der vorstehenden Ansprüche, **dadurch gekennzeichnet, dass** das Polypropylenmaterial ein glasgefülltes Polypropylenmaterial ist, typischerweise ein zu 20% glasgefülltes Polypropylenmaterial.

7. Rad nach einem der vorstehenden Ansprüche, **dadurch gekennzeichnet, dass** das elastomere Material thermoplastischen Kautschuk (TPR) umfasst.

8. Rad nach einem der vorstehenden Ansprüche, **dadurch gekennzeichnet, dass** die Verkeilungselemente Grate oder Kanäle umfassen, die sich teilweise oder vollständig über die Breite der Felgenoberfläche erstecken.

9. Rad nach einem der vorstehenden Ansprüche, **dadurch gekennzeichnet, dass** die Verkeilungselemente sich umfänglich erstreckende Kanäle (9) umfassen, die gerade unterhalb der Felgenoberfläche um die Seiten der Felge verlaufen.

10. Rad nach einem der vorstehenden Ansprüche, **dadurch gekennzeichnet, dass** die Verkeilungselemente diskrete Vorsprünge umfassen, die von der Oberfläche der Felge hervorstehen.

11. Rad nach Anspruch 10, **dadurch gekennzeichnet, dass** die Vorsprünge zeitlich exponiert werden, um den Reifenverschleiss anzuzeigen.

## Revendications

1. Roue pour un véhicule à propulsion électrique tel qu'un chariot de golf, la roue comprenant un ensemble constitué d'une jante (1) et d'un pneumatique intégré (15) qui comprend une pluralité d'éléments (19) de contact avec le sol faisant saillie radialement ou sensiblement radialement, ladite roue étant **caractérisée en ce que** la jante (1) est préformée à partir d'un matériau polypropylène et comprend une pluralité d'éléments de clavetage (7) qui font saillie à partir de la surface de la jante ou s'étendent dans celle-ci, et le pneumatique (15) est moulé sur la jante (1) à partir d'un matériau élastomère, lors de l'utilisation de la roue, les éléments de clavetage (7) empêchant le mouvement relatif entre le pneumatique et la jante.

2. Roue selon la revendication 1, **caractérisée en ce que** les surfaces latérales des éléments (19) de contact avec le sol font saillie dans des plans perpendiculaires (ou sensiblement perpendiculaires) à la direction de roulement de la roue et décrivent des arcs de rayons compris entre 30 mm et 36 mm sur au moins une grande partie de leur longueur.

3. Roue selon la revendication 1 ou 2, **caractérisée en ce que** la roue est formée de plus d'une rangée d'éléments (19) de contact avec le sol, dont chacun s'étend circonférentiellement autour de la surface extérieure de la roue.

4. Roue selon l'une quelconque des revendications précédentes, **caractérisée en ce que** les éléments (19) de contact avec le sol comprennent des goujons de forme conique dont les côtés décrivent des arcs sur de grandes parties de leur longueur.

5. Roue selon l'une quelconque des revendications précédentes, **caractérisée en ce que** les éléments de contact avec le sol comprennent des éléments en forme de lame (21) qui s'étendent sur une partie ou la totalité de la largeur de la surface du pneumatique, les parois avant et arrière de ces éléments en forme de lame étant, dans des plans perpendiculaires au sens de roulement de la roue, incurvées sur une grande partie de leurs longueurs.

6. Roue selon l'une quelconque des revendications précédentes, **caractérisée en ce que** le matériau polypropylène est un matériau polypropylène chargé de verre, généralement un matériau polypropylène chargé de 20 % de verre.

7. Roue selon l'une quelconque des revendications précédentes, **caractérisée en ce que** le matériau élastomère comprend du caoutchouc thermoplastique (TPR).

8. Roue selon l'une quelconque des revendications précédentes, **caractérisée en ce que** les éléments de clavetage comprennent des nervures ou des canaux qui s'étendent partiellement ou totalement sur la largeur de la surface de la jante.

9. Roue selon l'une quelconque des revendications précédentes, **caractérisée en ce que** les éléments de clavetage comprennent des canaux s'étendant circonférentiellement (9) qui s'étendent autour des côtés de la jante juste au-dessous de la surface de jante.

10. Roue selon l'une quelconque des revendications précédentes, **caractérisée en ce que** les éléments de clavetage comprennent des saillies discrètes dépassant de la surface de la jante.

11. Roue selon la revendication 10, **caractérisée en ce que** les saillies sont exposées au temps pour indiquer l'usure du pneumatique.
